Europäisches Patentamt

European Patent Office

Office européen des brevets

(11) Veröffentlichungsnummer: **0 547 480 A1**

(12) **EUROPÄISCHE PATENTANMELDUNG**

(21) Anmeldenummer: **92120898.9**

(22) Anmeldetag: **08.12.92**

(51) Int. Cl.5: **A01N 47/12**, A01N 35/02

(30) Priorität: **19.12.91 DE 4141953**

(43) Veröffentlichungstag der Anmeldung:
**23.06.93 Patentblatt 93/25**

(84) Benannte Vertragsstaaten:
**AT BE CH DE DK ES FR GB GR IT LI NL SE**

(71) Anmelder: **BAYER AG**

**W-5090 Leverkusen 1 Bayerwerk(DE)**

(72) Erfinder: **Lorentzen, Jens-Peter, Dr.**
**An der Ruthen 2**
**W-5000 Köln 80(DE)**
Erfinder: **Ludwig, Georg-Wilhelm, Dr.**
**Kemmerhofstrasse 181**
**W-4150 Krefeld(DE)**
Erfinder: **Paulus, Wilfried, Dr.**
**Deswatinesstrasse 90**
**W-4150 Krefeld(DE)**

(54) **Mikrobizide Mittel.**

(57) Beschrieben wurden mikrobizide Mittel zum Schutz von wässrigen funktionellen Flüssigkeiten, die als Wirkstoffe eine Kombination von mindestens einem Iodpropargylderivat und Benzylalkoholmono(poly)hemiformal enthalten.

Gegenstand der vorliegenden Anmeldung sind mikrobizide Mittel mit verbesserter bakterizider und fungizider Wirksamkeit sowie breitem Wirkspektrum, dadurch gekennzeichnet, daß sie als Wirkstoffe Iodpropargylderivate wie z.B. Iodpropargyl-N-butylcarbamat (IPBC) sowie Benzylalkoholmono(poly)-hemiformal (BHF) sowie gegebenenfalls weitere Mikrobizide enthalten.

IPBC ist ein bekanntes Fungizid und Algizid (US-P 4 276 211 und GB 2 138 292), das vorzugsweise in Anstrichmitteln verwendet wird. Im Gegensatz zur fungiziden Wirksamkeit von IPBC ist jedoch die antibakterielle Wirkung weniger ausgeprägt und lückenhaft, so daß beispielsweise wäßrige Anstrichmittel, die IPBC als Filmfungizid enthalten zusätzlich konserviert werden müssen. Generell erfordert der Materialschutz Mittel mit breiter bakterizider und fungizider Wirkung.

Da Iodpropargyle wie IPBC insbesondere gegen praxisrelevante gramnegative Bakterien nur mangelhaft wirksam sind, eignen sie sich allein nicht für die Konservierung wäßriger funktioneller Flüssigkeiten.

Demgegenüber bietet BHF eine ausgezeichnete Wirkung sowohl gegen grampositive als auch gegen gramnegative Bakterien während die fungizide Wirkung häufig erst bei höheren Konzentrationen erreicht wird. Aufgrund seiner Flüchtigkeit und Wasserlöslichkeit eignet sich BHF nicht als Anstrichfungizid. Als Konservierungsstoff ist BHF grundsätzlich einsetzbar, aufgrund der geringer ausgeprägten Fungizide müssen jedoch häufig Einsatzkonzentrationen im Bereich von ca. 1000 ppm verwendet werden.

Es ist empfehlenswert, daß das zu schützende Material aus Gründen der Ökonomie, der toxikologischen Unbedenklichkeit und der Ökologie sowie Fragen bezüglich der Verträglichkeit von technischen Materialien mit Mikrobiziden letztere in möglichst geringer Konzentration enthält.

Es wurde nun überraschenderweise gefunden, daß die neuen mikrobiziden Mittel die Iodpropargylderivate, wie vorzugsweise IPBC, und BHF enthalten, wäßrige funktionelle Flüssigkeiten nicht nur mit besserem fungizidem Schutz versehen, sondern auch besser und noch dazu in geringerer Anwendungskonzentration als die Einzelbestandteile, konservierend wirken. Bevorzugt konserviert werden dabei funktionelle Flüssigkeiten die sowohl anfällig gegen Bakterien, als auch gegen Schimmelpilze und Hefenbefall sind.

Als solche seien vorzugsweise folgende genannt:
1. Leime und Klebstoffe auf Basis der bekannten tierischen, pflanzlichen oder synthetischen Rohstoffe.
2. Kühlschmierstoffe, die in mineralölbasierte, teilsynthetische oder vollsynthetische Emulsionen oder Lösungen untergliedert werden können.
3. Polymerdispersionen einschl. Biopolymere.
4. Stärkelösungen, -dispersionen oder -slurries oder andere auf Basis von Stärke hergestellte Produkte wie z.B. Druckverdicker.
5. Slurries anderer Rohstoffe wie Farbpigmente (z.B. Eisenoxidpigmente, Rußpigmente, Titandioxidpigmente) oder Slurries von Füllstoffen wie Kaolin oder Calciumcarbonat.
6. Betonadditive beispielsweise auf Basis von Melasse oder Ligninsulfonaten.
7. Bitumenemulsionen.
8. Funktionelle Flüssigkeiten für die Druckindustrie (z.B. Feuchtmittel für den Offset-Druck).
9. Detergentien und Reinigungsmittel für den technischen und Haushaltsbedarf.
10. Mineralöle oder Mineralölprodukte (z.B. Dieselkraftstoffe).
11. Hilfsmittel für die Leder-, Textil- oder fotochemische Industrie.
12. Vor- und Zwischenprodukte der chemischen Industrie, z.B. bei der Farbstoffproduktion und -lagerung.
13. Tinten oder Tuschen.
14. Dispersionsfarben
15. Schlichten und Appreturen
16. Wachs- und Tonemulsion
17. Gelatinezubereitungen
18. Kosmetika

Von besonderer Bedeutung ist auch, daß die erfindungsgemäßen Wirkstoffkombinationen beziehungsweise Mittel z.B. wäßrige Anstrichmittel nicht nur fungizid und algizid ausrüsten (Filmschutz), sondern auch zuverlässig und dauerhaft während der Lagerung im Tank oder Gebinde konservieren.

Überraschenderweise zeigen die erfindungsgemäßen mikrobiziden Wirkstoffkombinationen einen ausgeprägten Synergismus, so daß die Anwendungskonzentrationen niedrig gehalten werden können. Insgesamt stellen die neuen mikrobiziden Mittel eine Bereicherung des Standes der Technik dar.

Die Gewichtsverhältnisse der Iodpropargylverbindungen zu BHF können in einem breiten Bereich variiert werden.

Für die Verwendung in wäßrigen Anstrichmitteln, die schimmelfeste Anstriche liefern und zugleich im Gebinde zuverlässig konserviert sein sollen, liegt das Iodpropargyl/BHF-Verhältnis zwischen 100:0 bis 50:50, bevorzugt 99:1 bis 70:30, besonders bevorzugt 95:5 bis 80:20.

In Konservierungsstoffen mit breiter antimikrobieller Wirkung (bakterizid und fungizid) sollte das BHF/Iodpropargylverhältnis 100:0 bis 50:50, bevorzugt 99:1 bis 70:30, besonders bevorzugt 98:2 bis 00:10 betragen.

Die erfindungsgemäßen Wirkstoffkombinationen weisen eine starke Wirkung gegen Mikroorganismen auf. Die erfindungsgemäßen Wirkstoffkombinationen werden im Materialschutz zum Schutz technischer Materialien insbesondere zum Schutz von wäßrigen funktionellen Flüssigkeiten verwendet; sie sind vor allem wirksam gegen Schimmelpilze, Bakterien, sowie gegen Hefen, Algen und Schleimorganismen. Beispielhaft - ohne jedoch zu limitieren -seien die folgenden Mikroorganismen genannt:

Alternaria wie Alternaria tenuis, Aspergillus wie Aspergillus niger und Aspergillus terreus, Aureobasidium wie Aureobasidium pullulans, Chaetomium wie Chaetomium globosum, Cladosporium wie Cladosporium herbarum, Coniophora wie Coniophora puteana, Gliocladium wie Gliocladium virens, Lentinus wie Lentinus tigrinus, Paecilomyces wie Paecilomyces varioti, Penicillium wie Penicillium brevicaule, Penicillium glaucum und Penicillium pinophilum, Polyporus wie Polyporus versicolor, Sclerophoma wie Sclerophoma pityophila, Streptoverticillium wie Streptoverticillium reticulum, Trichoderma wie Trichoderma viride, Trichophyton wie Trichophyton mentagrophytes;

Escherichia wie Escherichia coli, Pseudomonas wie Pseudomonas areuginosa, Staphylococcus wie Staphylococcus aureus;

Candida wie Candida albicans.

Die Menge der eingesetzten Wirkstoffkombinationen ist von dem Anwendungsgebiet abhängig. Die optimale Einsatzmenge kann bei der Anwendung jeweils durch Testreihen ermittelt werden. Im allgemeinen ist es jedoch ausreichend 0,001 bis 20 Gew.-%, vorzugsweise 0,05 bis 10 Gew.-%, insbesondere 0,01 bis 2 Gew.-%, der Wirkstoffgemische, bezogen auf das zu schützende Material, einzusetzen.

Die neuen Wirkstoffkombinationen können als solche, in Form von Konzentraten oder allgemein üblichen Formulierungen wie Pulver, Granulate, Lösungen, Suspensionen, Emulsionen oder Pasten in die wäßrigen funktionellen Flüssigkeiten eingearbeitet werden.

Die genannten Formulierungen werden in an sich bekannter Weise hergestellt, z.B. durch Vermischen der Wirkstoffe mit einem Lösungs-bzw. Verdünnungsmitteln, Emulgatoren, Dispergatoren und/oder Binde- oder Fixiermittels, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organischchemische Lösungsmittel oder Lösungsmittelgemische in Frage.

Als Lösungs- bzw. Verdünnungsmittels kommt vorzugsweise Wasser in Frage, gegebenenfalls in Mischung mit einem oder mehreren der üblicherweise verwendeten Lösungs- bzw. Verdünnungsmittel, Emulgatoren und Dispergatoren.

Die Wirksamkeit und das Wirkungsspektrum erfindungsgemäßer Wirkstoffkombinationen bzw. den daraus herstellbaren Mitteln, Konzentraten oder ganz allgemein Formulierungen wird erhöht, wenn gegebenenfalls weitere antimikrobiell wirksame Stoffe, Fungizide, Insektizide oder andere Wirkstoffe zur Vergrößerung des Wirkungsspektrums oder Erzielung besonderer Effekte wie z.B. dem zusätzlichen Schutz vor Insekten zugesetzt werden.

In vielen Fällen erhält man dabei synergistische Effekte, daß heißt, die Wirksamkeit der Mischung ist größer als die Wirksamkeit der Einzelkomponenten. Besonders bevorzugte Mischungspartner sind z.B. die folgenden Verbindungen:

Sulfenamide wie Dichlofluanid, Tolylfluanid, Folpet, Fluorfolpet;

Benzimidazole wie Carbendazim, Benomyl, Fuberidazole, Thiabendazole oder deren Salze;

Thiocyanate wie Thiocyanatomethylthiobenzothiazol, Methylenbisthiocyanat;

quartäre Ammoniumverbindungen wie Benzyldimethyltetradecylammoniumchlorid, Benzyldimethyldodecylammoniumchlorid, Didecyldimethylammoniumchlorid;

Morpholinderivate wie Tridemorph, Fenpropimorph, Falimorph;

Azole wie Triadimefon, Triadimenol, Bitertanol, Tebuconazole, Propiconazole, Azaconazole, Hexaconazole, Cyproconazol, Prochloraz, Bromuconazole;

2-(1-Chlorcyclopropyl)-1-(2-chlorphenyl)-3-(1,2,4-triazol-1-yl)-propan-2-ol;

Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbonat, 2,3,3-Triiodallylalkohol, 3-Brom-2,3-diiod-2-propenylalkohol, 3-Iod-2-propinyl-n-hexylcarbamat, 3-Iod-2-propinylcyclohexylcarbamat,3-Iod-2-propinyl-phenylcarbamat; Phenolderivate wie Tribromphenol, Tetrachlorphenol, 3-Methyl-4-chlorphenol, Dichlorophen, o-Phenylphenol, m-Phenylphenol, p-Phenylphenol, 2-Benzyl-4-chlorphenol;

Bromderivate wie 2-Brom-2-nitro-1,3-propandiol oder 5-Brom-5-nitro-1,3-dioxan;

Isothiazolinone wie N-Methylisothiazolin-3-on, 5-Chloro-N-methyl-isothiazolin-3-on, 4,5-Dichloro-N-octylisothiazolin-3-on, N-Octyl-isothiazolin-3-on;

Benzisothiazolinone, Cyclopentenisothiazolinone;

Pyridine wie 1-Hydroxy-2-pyridinthion (und ihre Na-, Fe-, Mn-, Zn-Salze), Tetrachlor-4-methylsulfonylpyridin;

Oxide wie Tributylzinnoxid, $Cu_2O$, CuO, ZnO;

Dialkyldithiocarbamate wie Na- und Zn-Salze von Dialkyldithiocarbamaten, Tetramethylthiuramdisulfid;

Nitrile wie 2,4,5,6-Tetrachlorisophthalodinitril;

Benzthiazole wie 2-Mercaptobenzothiazol;

Chinoline wie 8-Hydroxychinolin und deren Cu-Salze;

Borverbindungen wie Borsäure, Borsäureester, Borax;

Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer.

Aldehyde wie Formaldehyd oder dessen Depotstoffe wie z.B. Tris-$\omega$-hydroxyethyl-hexahydrotriazin, N-Methylolchloracetamid, Dimethylolharnstof, Dimethyloxazolidin, Methylenbis-1,3-dimethyloxazolidin, Methylenbis-1,3-oxazin, Trisoxymethylmethan, Tetrahydro-1,3,5-thiadiazin-2-thion sowie Glutardialdehyd, Acrolein, Glyoxal.

Iodpropargylakohol und Derivate wie z.B. Iodpropargyl-Alkoholcarbamate I-C≡-$CH_2$OCONHR mit R = H, Alkyl, Aryl, insbesondere R = Ph. Ester des Iodpropargylalkohols, insbesondere mit geschützten oder ungeschützten Aminosäuren, Dipeptiden und höheren Peptiden, z.B. I-C≡$CCH_2OCH_2OCOCHRNHCO_2C$-$(CH_3)_3$.

Ethoxylierte Iodpropargylalkohole wie z.B. I-C≡C-$CH_2OCH_2CH_2OH$, Triiodallylalkohol.

Mikrobistatisch bzw. mikrobizid wirksame Alkohole, wie z.B. Benzylalkohol, Methanol, Ethanol, Isopropanol, Phenylethylalkohol, 2-Phenoxyethanol, 2-Phenoxy-1-propanol, 3-(4-Chlorphenoxy)-1,2-propandiol, 2,4-Dichlorbenzylalkohol.

Organische Säuren und deren Derivate, wie z.B. Ameisensäure, Essigsäure, Chloressigsäure, Bromessigsäure, Peressigsäure, Propionsäure, Milchsäure, Weinsäure, Zitronensäure, Sorbinsäure, Undecensäure, Benzoesäure; p-Hydroxybenzoesäure und deren Ester, Salicylsäure, Dehydracetsäure, Chloressigsäure.

2-Mercaptopyrin-1-oxid, 2-Mercaptopyridin und deren Salze, 2,2'-Dithiopyridin-1-oxid.

Guaniden-Derivate, wie z.B. Polyhexamethylenbiguanidin-Hydrochlorid, Clorhexidin.

Morpholin-Derivate, wie z.B. 2-(2-Nitrobutyl)morpholin oder 4,4-(2-Ethyl-2-nitro-trimethylen)dimorpholin.

Dithiocarbamate, wie z.B. Salz des Dimethyldithiocarbamats.

Als Insektizide werden bevorzugt zugesetzt:

Phosphorsäureester wie Azinphos-ethyl, Azinphos-methyl, 1-(4-Chlorphenyl)-4-(O-ethyl,S-propyl)-phosphoryloxypyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichlorphon; Carbamate wie Aldicarb, Bendiocarb, 2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;

Organosiliciumverbindungen, vorzugsweise Dimethyl(phenyl)silyl-methyl-3-phenoybenzylether wie Dimethyl-(4-ethoxyphenyl)-silylmethyl-3-phenoxybenzylether oder (Dimethylphenyl)-silyl-methyl-2-phenoxy-6-pyridylmethylether wie z.B. Dimethyl(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethylsilan.

Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;

Nitroimine und Nitromethylene wie 1-[(6-Chlor-3-pyridinyl)-methyl]1-4,5-dihydro-N-nitro-1H-imidazol-2-amin (Imidacloprid).

Als andere Wirkstoffe kommen in Betracht Algizide, Molluskizide, Wirkstoffe gegen "sea animals", die sich auf z.B. Schiffsbodenanstrichen ansiedeln.

Die zum Schutz der technischen Materialien verwendeten mikrobiziden Mittel oder Konzentrate enthalten die erfindungsgemäßen Wirkstoffkombinationen in einer Konzentration von 0,01 bis 95 Gew.-%, insbesondere 0,01 bis 60 Gew.-%, daneben gegebenenfalls 0,001 bis 10 Gew.-% eines geeigneten weiteren Fungizids, Insektizids oder eines weiteren Wirkstoffs wie oben genannt.

Die erfindungsgemäßen Wirkstoffkombinationen bzw. Mittel ermöglichen in vorteilhafter Weise, die bisher verfügbaren mikrobiziden Mittel durch effektivere und umweltverträglichere zu ersetzen. Sie zeigen eine gute Stabilität und haben vorteilhafter Weise ein breites Wirkungsspektrum.

Die nachfolgenden Beispiele dienen zur Erläuterung der Erfindung ohne sie darauf zu limitieren. Teile und Prozentangaben bedeuten Gewichtsteile bzw. Gewichtsprozente.

Die folgenden mikrobiziden Mittel werden durch einfaches Mischen der Einzelkomponenten hergestellt.

1. 7,5 Gew.-Teile BHF + 30 Gew.-Teile IPBC in 62,5 Gew.-Teilen Butylglykol

2. 10 Gew.-Teile BHF + 30 Gew.-Teile IPBC in 60 Gew.-Teilen Butylglykol

3. 10 Gew.-Teile BHF + 20 Gew.-Teile IPBC in 70 Gew.-Teilen Butylglykol

4. 20 Gew.-Teile BHF + 20 Gew.-Teile IPBC in 60 Gew.-Teilen Butylglykol

5. 100 Gew.-Teile BHF + 2,5 Gew.-Teile IPBC

6. 100 Gew.-Teile BHF + 5 Gew.-Teile IPBC

7. 100 Gew.-Teile BHF + 10 Gew.-Teile IPBC

8. 90,9 Gew.-Teile BHF + 9,1 Gew.-Teile IPBC

Anwendungsbeispiele

A. Zum Nachweis der Wirksamkeit gegen Pilze werden die minimalen Hemm-Konzentrationen (MHK) von erfindungsgemäßen Mitteln bestimmt:

Ein Agar, der aus Bierwürze und Pepton hergestellt wird, wird mit erfindungsgemäßen Wirkstoffen in Konzentrationen von 0,1 mg/l bis 5000 mg/l versetzt. Nach Erstarren des Agars erfolgt Kontamination mit Reinkulturen der in der Tabelle 1 aufgeführten Testorganismen. Nach 2-wöchiger Lagerung bei 28°C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt, sie ist in der nachstehenden Tabelle 1 angegeben.

Tabelle 1   MHK's in ml/l bei der Einwirkung erfindungsgemäßer Substanzen als Pilze

| Testorganismen | Mikrobizide Mittel gemäß Beispiel | | | | | | | Vergleichssubstanzen | |
|---|---|---|---|---|---|---|---|---|---|
| | 1 | 2 | 3 | 4 | 5 | 6 | 7 | BHF | IPBC |
| Alternaria tenuis | 10 | 10 | 15 | 20 | 150 | 50 | 50 | >800 | 5 |
| Aspergillus niger | 5 | 7 | 7,5 | 10 | 100 | 100 | 35 | >800 | 5 |
| Aureobasidium pullulans | 35 | 50 | 150 | 50 | 200 | 200 | 75 | >800 | 15 |
| Chaetomium globosum | 5 | 5 | 5 | 10 | 50 | 35 | 20 | 300 | 5 |
| Cladosporium herbarum | 20 | 20 | 50 | 35 | 200 | 100 | 75 | >800 | 5 |
| Penicillium brevicaule | 75 | 15 | 5 | 5 | 100 | 20 | 10 | >800 | 1 |
| Sclerophoma pityophila | 3 | 3 | 3 | 75 | 75 | 15 | 5 | 800 | 1 |
| Trichoderma viride | 50 | 50 | 50 | 50 | 400 | 200 | 200 | >800 | 10 |

B. Wirkung gegen Bakterien

Ein Agar, der als Nährmedium Bouillon enthält, wird mit erfindungsgemäßen mikrobiziden Mitteln in Konzentrationen von 1 bis 5000 ppm versetzt. Darauf infiziert man das Nährmedium jeweils mit den in Tabelle II aufgeführten Testorganismen und hält das infizierte Medium 2 Wochen bei 28°C und 60 bis 70 % rel. Luftfeuchtigkeit. Die MHK ist die niedrigste Konzentration an mikrobizidem Mittel bei der keinerlei Bewuchs durch die verwendete Mikrobenart erfolgt. Die MHK-Werte sind in Tabelle II wiedergegeben.

Tabelle II

Angabe der MHK-Werte in mg/l bei der Einwirkung der unten angegebenen Wirkstoffe auf Bakterien

MHK in ml/l der mikrobiziden Mittel gemäß Beispiel

| | 1 | 2 | 3 | 4 | 5 | 6 | 7 | BHF | IPBC |
|---|---|---|---|---|---|---|---|---|---|
| Escherichia coli | 800 | 400 | 800 | 800 | 400 | 400 | 400 | 700 | 100 |
| Staphylococcus aureus | 300 | 300 | 300 | 300 | 400 | 400 | 800 | 300 | 100 |
| Pseudomonas aeruginosa | >800 | >800 | >800 | >800 | 800 | 800 | 800 | 800 | >1000 |
| Pseudomonas fluorescens | >800 | >800 | >800 | >800 | 600 | 400 | 600 | 400 | >1000 |
| Bacillus subtilis | 600 | 600 | 400 | 400 | 400 | 400 | 400 | 400 | 50 |
| Aeromonas punctata | 400 | 600 | 400 | 400 | 400 | 400 | 400 | 400 | 50 |
| Proteus mirabilis | 800 | 400 | >800 | 800 | 600 | 600 | 400 | 800 | 400 |
| Leuconostoc mesenteroides | 400 | 250 | 400 | 400 | 400 | 400 | 350 | 400 | 50 |
| Aerobacter aerogenes | 250 | 400 | 400 | 400 | 400 | 250 | 100 | 400 | 50 |
| Bacillus mycoides | 100 | 100 | 400 | 100 | 400 | 400 | 400 | 400 | 50 |

C. Antimikrobielle Ausrüstung einer PVAc-Dispersionsfarbe folgender Zusammensetzung:

| Bestandteile | kg |
|---|---|
| Bayer Titan RKB2 ($TiO_2$) | 35 |
| EWO-powder (Schwerspat = $BaSO_3$) | 20 |
| Micro Mica (Microdolomit = $CaMg(CO_3)_2$) | 15 |
| Talcum | 5 |
| $CaCO_3$ BLP2 | 25 |
| Mowilith DM 2H (PVAc) | 80 |
| Tylose MH 2000 K-2 % (CMC) | 20 |
| Calgon N 10 % (Polyphosphat) | 2,5 |
| Pigmentdisperser A 10 % (Polyacrylat) | 2,5 |
| $H_2O$ | 5,0 |
| | 210,0 |

Feststoffgehalt:   140 kg = 66 %

Proben der obengenannten Dispersionsfarbe werden mit 0,5 bis 2 % des mikrobiziden Mittels gemäß Beispiel 1 versetzt und wie in den beigefügten Methodenbeschreibungen angegeben auf Lagerbeständigkeit und Schimmelfestigkeit getestet.

Ergebnisse:

Wenn die Dispersionsfarbe 1,5 % mikrobizides Mittel gemäß Beispiel 1 enthält, ist sie zuverlässig konserviert; zugleich liefert sie schimmelfeste Anstriche.

Hingegen ist die Dispersionsfarbe, wenn sie nur IPBC (auch in größerer Dosis) enthält, nicht zuverlässig konserviert.

Enthält die Dispersionsfarbe nur BHF (auch in hoher Dosis), ist sie nicht schimmelfest.

D. Konservierung einer Styrol-Acrylat-Dispersionsfarbe folgender Zusammensetzung:

| Bestandteile | kg |
|---|---|
| Bayer Titan RKB2 ($TiO_2$) | 14 |
| Talkum V 58 | 10 |
| Durcal 5 (Kreide = $CaCO_3$) | 76 |
| Walsroder MC 3000s 2 %ig | 35 |
| Calgon N 10 %ig (Polyphosphat) | 3 |
| Pigmentverteiler A 10 %ig (Polyacrylat) | 2 |
| Wasser | 4 |
| Nopco 8034 E (1:1 in Texanol) Entschäumer) | 1 |
| Testbenzin | 2 |
| Butyldiglycolacetat | 2 |
| Acronal 290 D (Styrolacrylatdispersion) | 22 |
| | 171 |

Feststoffgehalt:   111 kg = 64,3

Proben der obengenannten Dispersionsfarbe werden mit 0,05 bis 0,15 % des mikrobiziden Mittels gemäß Beispiel 8 versetzt und gemäß beigefügter Prüfmethode auf Lagerbeständigkeit geprüft.

Ergebnisse:

Die Dispersionsfarbe ist zuverlässig konserviert, wenn sie 0,075 % mikrobizides Mittel gemäß Beispiel 8 enthält.

Prüfmethode:

Das zu prüfende Anstrichmittel wird beidseitig auf eine geeignete Unterlage gestrichen.

Um praxisnahe Ergebnisse zu erhalten wird ein Teil der Prüflinge vor dem Test auf Schimmelfestigkeit mit fließendem Wasser (24 h; 20°C) ausgelaugt; ein anderer Teil wird mit einem warmen Frischluftstrom behandelt (7 Tage; 40°C).

Die so vorbereiteten Prüflinge werden auf einen Agar-Nährboden gelegt. Prüflinge und Nährboden werden mit Plizsporen kontaminiert. Nach 1- bis 3-wöchiger Lagerung bei 29 ± 1°C und 80 bis 90 % rel. Luftfeuchte wird abgemustert. Der Anstrich ist dauerhaft schimmelfest, wenn der Prüfling pilzfrei bleibt oder höchstens einen geringen Randbefall erkennen läßt.

Zur Kontamination werden Pilzsporen folgender neun Schimmelpilze verwendet, die als Anstrichzerstörer bekannt sind oder häufig auf Anstrichen angetroffen werden:

1. Alternaria tenuis
2. Aspergillus flavus
3. Aspergillus niger
4. Aspergillus ustus
5. Cladosporium herbarum
6. Paecilopmyces varioti
7. Penicillium citrinum
8. Aureobasidium pullulans
9. Stachybotrys atra Corda

Prüfmethode:

Um die Wirksamkeit der Konservierung im Gebinde oder Tank zu prüfen, werden konservierten Dispersionsfarben oder andre wäßrige funktionelle Flüssigkeiten mit Bakterien und/oder Schimmelpilzen und Hefen kontaminiert. Nach einer gewissen Zeit wird geprüft, ob Keimabtötung oder Vermehrungshemmung eingetreten ist. Die Keimzahlbestimmung erfolgt in Standard-Keimzähl-Agar 1621 (barterienspezifisch) und Malzextrakt-Agar 5398 (schimmelspezifisch). Dem flüssigen, 40 bis 45°C warmen Malzextrakt-Agar wird 1 ml Aureomycinlösung pro Liter zugefügt, um Bakterienwachstum auszuschließen.

Nährboden:

z.B. Standard-Keimzahl Agar 1621
Malz-Extrakt Agar 5398
Liferant; E. Merck, Darmstadt
Aureomycin
0,4 %ig in dest. $H_2O$
Lieferant: Cyanamid GmbH
Wolfratshausen
Lederle Arzneimittel
Alle Geräte, Nährboden und Verdünnungslösung müssen sterilisiert werden.

Ausführung:

Ca. 100 g Probe werden mit 1 ml einer Bakterien- und Schimmelpilzabrollung kontaminiert. Die Abrollung soll $10^8$ bis $10^9$ Keine pro ml enthalten. Man kann zur Kontamination auch eine mikrobiell verdorbene Dispersionsfarbe oder andere wäßrige funktionelle Flüssigkeit verwenden. Folgende Mikrobenarten haben sich als Testorganismen bewährt:
Staphylococcus aureus
Pseudomonas aeruginosa
Bacterium coli
Aspergillus niger
Alternaria tenuis
Aspergillus flavus
Aspergillus ustrus
Cladosporium herbarum
Paecilomyces varioti

Penicillium citrinum

Aureobasidium pullulans

Stachybotrys atra Corda

48 h nach der Kontamination wird 1 g Farbe entnommen und mit 20 ml steriler, 0,85 %iger Kochsalzlösung verdünnt, 1 ml dieser Verdünnung gibt man in die Petrischale und dazu ca. 10 ml flüssigen Nährboden, der eine Temperatur von 40 bis 45 ° C hat.

Der noch flüssige Nährboden wird in der Schale rund geschwenkt, damit sich die probe gleichmäßig verteilt. Die erkalteten Petrischalen werden 96 h bei ca. 29 ° C gelagert. Nach 48 und 96 h werden die Mikrobenkolonien pro Flächeneinheit gezählt. Zum Auszählen genügt eine 20 bis 40fache Vergrößerung. Die Keimzahl wird angegeben in Kolonien bildende Einheiten (KBE)/g Probe, Ist die Keimzahl sehr hoch, müssen Unterverdünnungen von z.B. 1:1000 angesetzt werden, damit die Kolonien in der Petrischale zählbar werden.

Die Wirkung eines Konservierungsmittels kann durch dessen Abwanderung aus der Wasserphase in die disperse Phase oder durch Reaktion mit anderen Inhaltstoffen der Dispersionsfarbe nachlassen.

Es ist daher angebracht, diese Prüfung nicht nur einmal unmittelbar nach der Anstrichmittel-Herstellung durchzuführen, sondern mehrfach im Verlauf von 2 bis 12 Wochen. Auf diese Weise erfährt man, ob die konservierende Wirkung mit der Zeit nachläßt und ob das betreffende Anstrichmittel auch spätere Kontaminationen noch verkraftet.

Ein wäßriges Anstrichmittel ist dann gut konserviert, wenn es am Ende der Prüfzeit (nach 12 Wochen) trotz wiederholter massiver Kontamination keimfrei ist.

Ein ausreichender Konservierungseffekt ist auch erreicht, wenn die Zahl der eingebrachten Keime stark reduziert wird und die Zahl der überlebenden Keime im Verlauf von 3 bis 4 Wochen nicht wieder ansteigt (Keimhemmung, mikrobistatische Wirkung).

Beispiel E

Konservierung von mineralölbasierten Kühlschmierstoffen mit BHF oder IPBC allein sowie in Kombination BHF : IPBC = 100:5. Kontamination mit den praxisrelevanten Keimen:

Bakterien:      Pseudomonas diverse Arten Alcaligenes faecalis Citrobacter freundii Corynebacterium

Schimmelpilze:  Fusarium solani Acremonium strictum Geotrichum candidum

Hefe:           Rhodotorula rubra

**Tabelle 3**

| Konservierung mit | Konzentration [ppm] | Bakterien pro ml | Schimmelpilze pro ml | Hefen pro ml |
|---|---|---|---|---|
| BHF | 200 | 0 | $>10^5$ | $>10^5$ |
| BHF | 400 | 0 | $>10^5$ | $>10^5$ |
| BHF | 800 | 0 | $10^3$ | 0 |
| BHF | 1600 | 0 | 0 | 0 |
| IPBC | 200 | $>10^5$ | 0 | 0 |
| IPBC | 400 | $>10^5$ | 0 | 0 |
| IPBC | 800 | $10^4$ | 0 | 0 |
| IPBC | 1600 | 0 | 0 | 0 |
| BHF/IPBC (100/4) | 40 | $>10^5$ | $>10^5$ | $>10^5$ |
| BHF/IPBC (100/4) | 80 | $>10^5$ | $10^3$ | $10^3$ |
| BHF/IPBC (100/4) | 160 | 0 | 0 | 0 |
| BHF/IPBC (100/4) | 200 | 0 | 0 | 0 |
| Kontrolle | – | $10^7$ | $10^5$ | $10^6$ |

Aus der Tabelle 3 ist ersichtlich, daß für eine ausreichende Konservierung ca. 1600 ppm BHF oder IPBC benötigt werden, um sowohl hinreichenden Schutz gegen Bakterien-, Schimmelpilze- und Hefebefall zu erzielen. Dagegen gewährleisten nur 160 ppm des Wirkstoffgemisches aus BHF und IPBC im Verhaltnis 100:4 einen ausgezeichneten Schutz sowohl gegen Bakterien als auch gegen Schimmelpilze und Hefen.

**Patentansprüche**

1. Mikrobizide Mittel zum Schutz von wässrigen funktionellen Flüssigkeiten enthaltend mindestens ein Iodpropargyl-Derivat und Benzylalkoholmono(poly)hemiformal (BHF).

11

**2.** Mikrobizide Mittel gemäß Anspruch 1, enthaltend als Iodpropargyl-Derivat Iodpropargyl-N-butylcarbamat (IPBC).

**3.** Mikrobizide Mittel gemäß Anspruch 1, enthaltend Lösungs- beziehungsweise Verdünnungsmittel sowie gegebenenfalls Emulgatoren, Dispergatoren, Bleich- oder Fixiermittels, Sikkative, UV-Stabilisatoren, Farbstoffe, Pigmente sowie weitere Verarbeitungshilfsmittel und gegebenenfalls weitere Wirkstoffe.

**4.** Mikrobizide Mittel gemäß Anspruch 1 zum Schutz von Anstrichmitteln.

**5.** Verwendung einer Wirkstoffkombination nach Anspruch 1 zum Schutz von funktionellen Flüssigkeiten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 607 624 (BAYER) <br> * Ansprüche 1,10 * <br> * Seite 3, Zeile 30 - Zeile 46 * <br> * Seite 6, Zeile 32 - Zeile 34 * <br> * Seite 7, Zeile 5 - Zeile 36 * <br> * Seite 7, Zeile 59 - Seite 8, Zeile 1 * <br> * Seite 8, Zeile 37 - Zeile 42 * <br> --- | 1,3-5 | A01N47/12 <br> A01N35/02 |
| X | EP-A-0 199 047 (BAYER) <br> * Spalte 1, Zeile 1 - Zeile 41 * <br> * Spalte 11, Zeile 43 - Spalte 12, Zeile 29 * <br> * Spalte 14, Zeile 6 - Zeile 19 * <br> --- | 1,3-5 | |
| Y | EP-A-0 327 220 (LONZA) <br> * Seite 3, Zeile 1 - Zeile 54 * <br> * Ansprüche 1,2 * <br> --- | 1-5 | |
| Y | FR-A-1 590 662 (FARBENFABRIKEN BAYER) <br> * das ganze Dokument * <br> --- | 1-5 | |
| P,X | EP-A-0 510 458 (BAYER) <br> * Seite 2, Zeile 28 - Seite 5, Zeile 9 * <br> * Seite 5, Zeile 20 - Zeile 26 * <br> * Seite 5, Zeile 52 * <br> --- | 1-5 | RECHERCHIERTE SACHGEBIETE (Int. Cl.5) <br><br> A01N |
| A | FR-A-2 352 552 (BAYER) <br> * das ganze Dokument * <br> --- | 1-5 | |
| A | DE-A-2 723 118 (BAYER) <br> * Ansprüche 1,9 * <br> * Seite 8, Absatz 5 - Seite 9, Absatz 1 * <br> --- | 1-5 | |
| A | GB-A-2 138 292 (TROY CHEMICAL) <br> * das ganze Dokument * <br> ----- | 1-5 | |

Der vorliegende Recherchenbericht wurde für alle Patentansprüche erstellt

| Recherchenort | Abschlußdatum der Recherche | Prüfer |
|---|---|---|
| DEN HAAG | 04 MAERZ 1993 | LAMERS W. |

EPO FORM 1503 03.82 (P0403)